(19) Europäisches Patentamt
European Patent Office
Office européen des brevets

(11) Veröffentlichungsnummer: **0 108 240**
**A1**

(12) # EUROPÄISCHE PATENTANMELDUNG

(21) Anmeldenummer: 83109733.2

(22) Anmeldetag: 29.09.83

(51) Int. Cl.³: C 08 F 210/02

(30) Priorität: 07.10.82 DE 3237107

(43) Veröffentlichungstag der Anmeldung: 16.05.84 Patentblatt 84/20

(84) Benannte Vertragsstaaten: AT BE DE FR GB NL

(71) Anmelder: BASF Aktiengesellschaft
Carl-Bosch-Strasse 38
D-6700 Ludwigshafen(DE)

(72) Erfinder: Ziegler, Walter, Dr.
Starenweg 15
D-6803 Edingen-Neckarhausen(DE)

(72) Erfinder: Brandstetter, Franz, Dr.
Ritterbueschel 45
D-6730 Neustadt(DE)

(72) Erfinder: Ball, Wolfgang, Dr.
O 6,9
D-6800 Mannheim 1(DE)

(72) Erfinder: Glaser, Rudolf, Dr.
Don-Carlos-Strasse 9
D-6700 Ludwigshafen(DE)

(72) Erfinder: Gropper, Hans, Dr.
Sternstrasse 155
D-6700 Ludwigshafen(DE)

(72) Erfinder: Weiss, Frank, Dr.
Rossdorfer Strasse 77
D-6100 Darmstadt(DE)

(54) **Terpolymerisate des Ethylens.**

(57) Die Erfindung betrifft Terpolymerisate des Ethylens, die auf 100 Mol Ethylen einpolymerisiert enthalten:

a) 0,33 bis 1,76 Mol eines mit Ethylen copolymerisierbaren Comonomeren der allgemeinen Formel

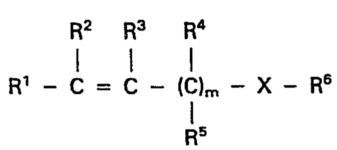

wobei $R^1$, $R^2$, $R^3$, $R^4$, $R^5$ Wasserstoff und/oder ein aliphatischer Kohlenwasserstoffrest mit 1 bis 3 Kohlenstoffatomen, $R^6$ Wasserstoff, ein aliphatischer Kohlenwasserstoffrest mit 1 bis 8 Kohlenstoffatomen, ein

Rest 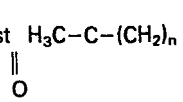

mit n = 0 bis 6, und wobei m = O bis 6 und X = O, N, S, Si oder P sein kann, und

b) 0,11 bis 0,59 Mol eines mit Ethylen copolymerisierbaren Comonomeren der allgemeinen Formel

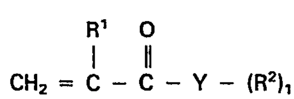

wobei $R^1$ Wasserstoff und ein aliphatischer Kohlenwasserstoffrest mit 1 bis 2 Kohlenstoffatomen, $R^2$ Wasserstoff oder ein aliphatischer Kohlenwasserstoffrest mit 1 bis 12 Kohlenstoffatomen, Y Sauerstoff oder Stickstoff und 1 im Falle von Sauerstoff gleich 1, im Falle von Stickstoff gleich 2 sein kann.

EP 0 108 240 A1

## Terpolymerisate des Ethylens

Copolymerisate des Ethylens mit einer Reihe von Comonomeren sind aus der Literatur bekannt. Größere technische Anwendung finden vor allem Copolymerisate des Ethylens mit Vinylacetat bzw. Alkylestern der (Meth)acrylsäure. In der DE-OS 2 340 743 sind aber auch schon Terpolymerisate des Ethylens beschrieben, die gleichzeitig Vinylacetat und Alkylester der (Meth)acrylsäure enthalten. Die nach dem dort beschriebenen Verfahren hergestellten Terpolymerisate enthalten einen relativ hohen Anteil an Comonomeren und sind daher für viele Anwendungsbereiche, vor allem wenn eine hohe Steifigkeit vonnöten ist, ungeeignet.

Für viele Bereiche ist es in der jetzigen Zeit der Rohstoffverknappung erforderlich, Materialien zur Verfügung zu haben, die eine Reduktion der Wandstärke z.B. von Folien gestatten, d.h. die eine hohe Zähigkeit bei guter Steifigkeit besitzen.

Diese Aufgabe wurde durch die erfindungsgemäßen Terpolymerisate des Ethylens gemäß Patentanspruch gelöst.

Die Herstellung der Ethylen-Terpolymerisate kann nach herkömmlichen üblichen Hochdruckpolymerisationsverfahren erfolgen [vgl. Ullmanns Enzyklopädie der Technischen Chemie, 4. Auflage, Band 19 (1980), Seiten 169 bis 175, Verlag Chemie GmbH, D-6940 Weinheim]. Die Terpolymerisation des Ethylens erfolgt bei Drücken von 350 bis 5000 bar, vorzugsweise 1500 bis 3000 bar. Bei der Herstellung der erfindungsgemäßen Terpolymerisate des Ethylens arbeitet man im besonderen bei Drücken von 2000 bis 2800 bar. Die Temperaturen im Polymerisationssystem liegen zwischen 50 und 450°C, vorzugsweise zwischen 150 und 350°C. Die Bedingungen im Polymerisationssystem lassen sich apparativ in sogenannten Rohrreaktoren oder Autoklaven einstellen. Unter Rohrreaktoren versteht man rohrförmige Polymerisationsgefäße, deren Längenausdehnung das über 2000fache, bevorzugt 5000 bis 50 000fache des Rohrdurchmessers beträgt. Wie üblich, wird ein Teil der Polymerisationswärme durch Kühlung des Rohrreaktors mit Wasser von außen abgeführt. Autoklaven sind Druckgefäße mit einem Längen-/Durchmesser-Verhältnis von 1 bis ca. 20. Besonders geeignet für die Herstellung der erfindungsgemäßen Terpolymerisate des Ethylens sind Rohrreaktoren und hierbei vor allem Einzonen- bzw. Zweizonen-Rohrreaktoren.

Die Terpolymerisation des Ethylens mit den mit Ethylen copolymerisierbaren Monomeren erfolgt in Gegenwart radikalischer Initiatoren. Unter radikalischen Polymerisationsinitiatoren sollen diejenigen Katalysatoren verstanden werden, die auch für die Homopolymerisation des Ethylens unter

Fre/HB

hohem Druck verwendet werden. Geeignet ist beispielsweise Sauerstoff, zweckmäßigerweise in Mengen von 10 bis 200 Mol.ppm, bezogen auf das zu polymerisierende Ethylen. In Betracht kommen außerdem Peroxide und andere radikalbildende Verbindungen sowie Gemische von Peroxiden, die unterschiedliche Zerfallstemperaturen haben und Hydroperoxide, vor allem aber auch Mischungen aus Sauerstoff und Peroxiden und/oder Hydroperoxiden. Als Beispiele für Peroxide und Hydroperoxide seien genannt: tert.-Butylperpivalat, di-tert.-Butylperoxid, tert.-Butylhydroperoxid, tert.-Butylperbenzoat, Dilauroylperoxid und tert.-Butylperisononanat. Unter radikalischen Polymerisationsinitiatoren sollen auch Verbindungen wie beispielsweise Azo-iso-Buttersäuredinitril verstanden werden. Man kann auch Mischungen aus Sauerstoff und einem oder mehreren Peroxiden verwenden. Besonders geeignet sind Peroxide, wie di-tert.-Butylperoxid, tert.-Butylperpivalat und tert.-Butylperisononanat.

Das Molekulargewicht des anfallenden Terpolymerisats kann durch die üblichen Regler, z.B. Kohlenwasserstoffe wie Propan, Propen etc., Ketone wie Aceton, Methylethylketon etc. oder Aldehyde wie Propionaldehyd, auf den gewünschten Wert gebracht werden. Besonders geeignet sind hierbei Propionaldehyd.

Die Terpolymerisation wird im allgemeinen in Abwesenheit eines Lösungsmittels durchgeführt. Die geringen Mengen eines inerten Lösungsmittels, wie Benzol, Mineralöle oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Als Komponente a) der Terpolymerisate des Ethylens kommen vor allem Derivate des Vinylalkohols wie Vinylacetat, Vinylpropionat, und höhere ungesättigte Alkohole wie Butenole in Frage. Besonders geeignet sind Vinylacetat und 3-Methylbuten-1-ol-3.

Als Komponente b) eignen sich insbesondere (Meth)acrylsäure, deren Ester und Amide wie z.B. Methacrylat, Methylmethacrylat, Ethylacrylat, n-Butylacrylat, Acrylamid; N- Mono- und N,N-Dialkylamide. Ganz besonders geeignet ist n-Butylacrylat.

Die Terpolymerisate können mehrere Comonomere der Art von a) und b) einpolymerisiert enthalten.

Die Ethylen-Terpolymerisate enthalten auf 100 Mol Ethylen einpolymerisiert: 0,33 bis 1,76 Mol der Komponente a) und 0,11 bis 0,59 Mol Komponente b), bevorzugterweise 0,67 bis 1,03 Mol der Komponente a) und 0,23 bis 0,46 Mol der Komponente b).

Die erfindungsgemäßen Terpolymerisate des Ethylens haben Schmelzindices von größer als 0,01 g/10 min, vorzugsweise im Bereich von 0,1 bis 60 g/10 min, besonders aber im Bereich von 0,1 bis 5 g/10 min, gemessen nach DIN 53 735 bei 190°C und 2,16 Kp. Ganz besonders bevorzugt sind Terpolymerisate des Ethylens mit Schmelzindices im Bereich von 0,2 bis 0,6 g/10 min.

Die erfindungsgemäßen Terpolymerisate des Ethylens weisen Dichten von größer 0,915 [$g/cm^3$], bevorzugt von 0,920 bis 0,930 [$g/m^3$], gemessen nach DIN 53 479 auf.

Die erfindungsgemäßen Terpolymerisate besitzen ausgezeichnete Eigenschaften, die höher liegen, als wenn man dieselbe Menge nur eines Comonomeren in einem Ethylencopolymerisat verwendet. Sie besitzen vor allem eine sehr hohe Folienzähigkeit bei noch guter Steifigkeit.

Beispiele und Vergleichsversuche

Die Polymerisation des Ethylens mit den genannten Comonomeren wurde in einem Rohrreaktor mit Kaltgasnachdosierung durchgeführt. Das Längen-/Durchmesserverhältnis betrug in der 1. Reaktionszone etwa 11 000, in der 2. Reaktionszone etwa 7000. Zur Abführung der Polymerisationswärme wurden die Rohrwände von außen mit Wasser gekühlt.

Beispiel 1

Der Reaktor wurde auf der Eingangsseite kontinuierlich mit einem auf 2700 bar komprimierten Gemisch, bestehend aus 1150 kg/h Ethylen, 0,46 l/h Propionaldehyd, 17 l/h Vinylacetat und 8 l/h n-Butylacrylat beschickt. Nach ca. 8/15 der Länge des Reaktors wurde ein weiterer Teilstrom von 1150 kg/h Ethylen zugefügt. Das Ethylen des Teilstromes auf der Eingangsseite des Reaktors enthielt 12,3 Mol-ppm/h Sauerstoff, das Ethylen des 2. Teilstroms 8,2 Mol-ppm/h Sauerstoff als Initiator. Das Reaktionsgemisch erreichte dadurch in der 1. Reaktionszone eine Maximaltemperatur von 290°C und in der 2. Reaktionszone von 270°C. Es fielen 425 kg/h Ethylenterpolymerisat an, das 100 Mol Ethylen, 0,78 Mol Vinylacetat und 0,36 Mol Butylacrylat enthielt und einen Schmelzindex von 0,30 g/10 min, gemessen nach DIN 53 735 bei 190°C und 2,16 kp aufwies.

Beispiele 2, 3, 4 und Vergleichsversuche A, B und C

Die Herstellung der Produkte nach den Beispielen 2 und 3 sowie der nicht erfindungsgemäßen Vergleichsversuche A, B und C erfolgte analog zum Beispiel 1. Die entsprechenden Versuchsparameter sind in der folgenden Tabelle 1 zusammengefaßt.

Tabelle 1

| Beispiel Nr. | Druck (bar) | max.Polym. temperatur (°C) | | Initiatormenge (Mol-ppm/h $O_2$) | | Ethylen-dosierung (kg/h) | | Comonomeren-dosierung (1/h) | | | Regler (1/h) | Produktzusammen-setzung (Mol) | | | | MFI (g/10') | Ausstoß (kg/h) |
|---|---|---|---|---|---|---|---|---|---|---|---|---|---|---|---|---|---|
| | | | | | | | | VAc | nBa | MBE | PA | E | VAc | nBa | MBE | | |
| | | RZI | RZII | RZI | RZII | RZI | RZII | RZI | RZI | RZI | RZI | | | | | | |
| 2 | 2700 | 290 | 270 | 12,0 | 8,1 | 1150 | 1150 | 34 | 8,5 | - | 0,20 | 100 | 1,63 | 0,37 | - | 0,32 | 435 |
| 3 | 2700 | 280 | 260 | 10,3 | 6,3 | 1150 | 1150 | - | 8 | 20 | 0,67 | 100 | - | 0,36 | 0,68 | 0,26 | 410 |
| 4 | 2700 | 290 | 270 | 13,1 | 8,0 | 1150 | 1150 | 15 | 5 | - | 0,48 | 100 | 0,67 | 0,23 | - | 0,30 | 425 |
| Vergleichs-Versuche (nicht erfindungsgemäß) | | | | | | | | | | | | | | | | | |
| A | 2700 | 290 | 270 | 14,1 | 7,8 | 1150 | 1150 | 18 | - | - | 0,42 | 100 | 0,94 | - | - | 0,25 | 425 |
| B | 2700 | 290 | 270 | 13,5 | 7,2 | 1150 | 1150 | - | 20 | - | 0,51 | 100 | - | 0,91 | - | 0,34 | 440 |
| C | 2700 | 290 | 270 | 12,0 | 7,5 | 1150 | 1150 | 53 | 8,5 | - | - | 100 | 2,80 | 0,39 | - | 0,35 | 460 |

PA = Propionaldehyd
E = Ethylen
VAc = Vinylacetat
nBA = n-Butylacrylat
MBE = 3-Methylbuten-1-ol-3
RZ I = 1. Reaktionszone
RZ II = 2. Reaktionszone

Tabelle 2

| Beispiele | Ethylen [Mol] | Komponente b | [Mol] | Komponente c | [Mol] | Schmelz-index [g/10min] | Dichte [$g/cm^3$] | G-Modul [$N/mm^2$] | DDI [cN] |
|---|---|---|---|---|---|---|---|---|---|
| 1 | 100 | Vinylacetat | 0,78 | n-Butylacrylat | 0,36 | 0,3 | 0,9271 | 160 | 390 |
| 2 | 100 | Vinylacetat | 1,63 | n-Butylacrylat | 0,37 | 0,32 | 0,9284 | 120 | 550 |
| 3 | 100 | 3-Methylbuten-1-ol-3 | 0,68 | n-Butylacrylat | 0,66 | 0,26 | 0,9254 | 150 | 260 |
| 4 | 100 | Vinylacetat | 0,67 | n-Butylacrylat | 0,23 | 0,30 | 0,9280 | 200 | 280 |
| Vergleichs-versuche | | | | | | | | | |
| A | 100 | Vinylacetat | 0,94 | - | | 0,25 | 0,9284 | 200 | 170 |
| B | 100 | - | | n-Butylacrylat | 0,91 | 0,3 | 0,9252 | 145 | 190 |
| C | 100 | Vinylacetat | 2,80 | n-Butylacrylat | 0,39 | 0,35 | 0,9307 | 90 | 550 |

DDI = Dart-Drop-Impact nach ASTM-D 1709-67 (Methode A)
G = Modul nach DIN 53 445

## Patentanspruch

Terpolymerisate des Ethylens, die auf 100 Mol Ethylen einpolymerisiert enthalten:

a) 0,33 bis 1,76 Mol eines mit Ethylen copolymerisierbaren Comonomeren der allgemeinen Formel

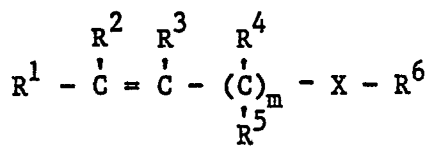

wobei $R^1$, $R^2$, $R^3$, $R^4$, $R^5$ Wasserstoff und/oder ein aliphatischer Kohlenwasserstoffrest mit 1 bis 3 Kohlenstoffatomen, $R^6$ Wasserstoff, ein aliphatischer Kohlenwasserstoffrest mit 1 bis 8 Kohlenstoffatomen, ein Rest $H_3C-C(=O)-(CH_2)_n-$ mit n = 0 bis 6, und wobei m = 0 bis 6 und X = O, N, S, Si oder P sein kann, und

b) 0,11 bis 0,59 Mol eines mit Ethylen copolymerisierbaren Comonomeren der allgemeinen Formel

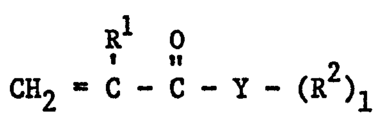

wobei $R^1$ Wasserstoff und ein aliphatischer Kohlenwasserstoffrest mit 1 bis 2 Kohlenstoffatomen, $R^2$ Wasserstoff oder ein aliphatischer Kohlenwasserstoffrest mit 1 bis 12 Kohlenstoffatomen, Y Sauerstoff oder Stickstoff und l im Falle von Sauerstoff gleich 1, im Falle von Stickstoff gleich 2 sein kann.

0108240

Europäisches Patentamt

# EUROPÄISCHER RECHERCHENBERICHT

Nummer der Anmeldung

EP 83 10 9733

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | | | C 08 F 210/02 |
| A | US-A-3 458 487 (G.A. MORTIMER) * Anspruch 1; Spalte 2, Zeilen 41-54 * --- | 1 | |
| A | US-A-3 451 982 (G.A. MORTIMER) * Anspruch 1; Spalte 2, Zeilen 37-49 * --- | 1 | |
| A | FR-A-1 297 066 (CHEMICAL INVESTORS) * Zusammenfassung, Punkte 1,6 * --- | 1 | |
| A | FR-A-1 252 984 (UCC) * Zusammenfassung; Punt A1 * --- | 1 | |
| D,A | DE-A-2 340 743 (VEB LEUNA-WERKE WALTER ULBRICHT) * Ansprüche 1,5 * ----- | 1 | RECHERCHIERTE SACHGEBIETE (Int. Cl. 3) |
| | | | C 08 F |

Der vorliegende Recherchenbericht wurde für alle Patentansprüche erstellt.

| Recherchenort | Abschlußdatum der Recherche | Prüfer |
|---|---|---|
| DEN HAAG | 25-01-1984 | PERMENTIER W.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82